# EUROPEAN PATENT APPLICATION

(11) **EP 4 044 299 A1**
(43) Date of publication of application: **17.08.2022**
(21) Application number: 20886832.3
(22) Date of filing: 12.02.2020
(51) Int. Cl.: H01M 8/021, C25F 1/06, C25F 7/00, C22C 38/50, C22C 38/00, H01M 8/1018

(54) **METHOD FOR MANUFACTURING STAINLESS STEEL FOR POLYMER FUEL CELL SEPARATOR**

(30) Priority: 11.11.2019 KR 20190143672
(71) Applicant: POSCO, Pohang-si, Gyeongsangbuk-do 37859 (KR)
(72) Inventor: KIM, Young Jun, Pohang-si Gyeongsangbuk-do 37859 (KR); SEO, Bo-Sung, Pohang-si Gyeongsangbuk-do 37656 (KR); KIM, Kwang Min, Pohang-si Gyeongsangbuk-do 37669 (KR); KIM, Dong-Hoon, Pohang-si Gyeongsangbuk-do 37655 (KR)
(74) Representative: Potter Clarkson
(86) International application number: PCT/KR2020/001939
(87) International publication number: WO 2021/095997

(57) **Abstract**

Disclosed is a method for manufacturing a stainless steel for a polymer electrolyte membrane fuel cell separator, and more particularly, a method for manufacturing a stainless steel for a polymer electrolyte membrane fuel cell separator capable of obtaining low contact resistance and high corrosion resistance by effectively removing a non-conductive coating and forming a new coating. According to an embodiment, the disclosed method for manufacturing a stainless steel for a polymer electrolyte membrane fuel cell separator includes performing alternating current electrolysis by immersing, in a sulfuric acid solution, a stainless steel having a passivation coating formed on a surface thereof by cold rolling and bright annealing, wherein the alternating current electrolysis is performed by applying a current density of 10 to 30 A/dm².

## Description

### [Technical Field]

The present disclosure relates to a method for manufacturing a stainless steel for a polymer electrolyte membrane fuel cell separator, and more particularly, to a method for manufacturing a stainless steel for a polymer electrolyte membrane fuel cell separator capable of obtaining low contact resistance and high corrosion resistance by effectively removing a non-conductive coating and forming a new coating.

### [Background Art]

A polymer electrolyte membrane fuel cell is a fuel cell using a polymer membrane having hydrogen ion exchange characteristics as an electrolyte and has a lower operating temperature of approximately 80°C and a higher efficiency than other types of fuel cells. Also, the polymer electrolyte membrane fuel cell may be used in vehicles and home use because the polymer electrolyte membrane fuel cell quickly starts a device and has a high output power density and a simple body structure.

A polymer electrolyte membrane fuel cell includes a unit cell structure in which a gas diffusion layer and a separator are stacked on both sides of a membrane electrode assembly (MEA) including an electrolyte, an anode, and a cathode. A structure in which a plurality of unit cells are connected in series is called a fuel cell stack.

In the polymer electrolyte membrane fuel cell, the separator serves to prevent reactive gases such as hydrogen gas and oxygen gas from being mixed, electrically connect a membrane electrode assembly (MEA), and support the MEA to maintain a shape of the fuel cell. Therefore, the separator should have a dense structure to prevent the two gases from being mixed, have excellent electrical conductivity to serve as a conductor, and have sufficient mechanical strength to serve as a support.

Conventionally, graphite has generally been used as a material of a separator to withstand a strongly corrosive environment of a fuel cell. However, a Ti alloy or a stainless steel has recently been used as a material of a separator due to problems of manufacturing costs and weights of graphite separators.

In the case where a stainless steel is used as a separator of a polymer electrolyte membrane fuel cell, a stainless steel sheet having a thickness of about 0.1 mm is used, and such a stainless steel sheet is manufactured by cold rolling and bright annealing heat treatment processes. Because the bright annealing heat treatment is performed in a reducing atmosphere, a stainless steel sheet having a several nm-thick passivation coating with a smooth surface is formed instead of a stainless steel sheet having a surface with several µm-thick high-temperature oxidized scales formed in an oxidizing atmosphere. Because the passivation coating formed by the bright annealing performed in a reducing atmosphere has a high resistance, a post treatment process to reduce interfacial contact resistance and enhance corrosion resistance is required to use the bright-annealed stainless steel as a fuel cell separator.

As representative examples of the post treatment process, a process of additionally coating a noble metal such as gold (Au) or additionally coating a nitride on the surface to reduce interfacial contact resistance may be used. However, these methods have problems of increases in manufacturing costs and manufacturing time due to the additional process of coating the noble metal or nitride and decreases in productivity thereby. In addition, because the formed separators should be individually coated, mass production is difficult.

To solve these problems, Patent Document 1 discloses a method of acid pickling a passivating coating using a nitric acid solution. However, it is disadvantages in that a post treatment process takes a long time due to low acid pickling efficiency.

Patent Document 2 discloses a two-step electrolysis using direct current powder, in which a non-conductive coating of a steel is removed using a high electric potential in a first step and the surface of the steel is modified using a low electric potential to prevent elution of chromium caused by the high electric potential in a second step. Although a processing time is reduced by electrolysis according to Patent Document 2, the overall surface modification rate is still low due to the two-step electrolysis. In addition, there may be a problem in that a process of immersing a stainless steel in an acid pickling bath after the electrolysis takes a long time.
(Patent Document 0001) Korean Patent Laid-open Publication No. 10-2014-0081161
(Patent Document 0002) Korean Patent Laid-open Publication No. 1 0-2015-0133565

### [Disclosure]

### [Technical Problem]

To solve the aforementioned problems, the present disclosure provides a method for manufacturing a stainless steel for a polymer electrolyte membrane fuel cell separator capable of obtaining low contact resistance and high corrosion resistance by effectively removing a non-conductive coating present on a surface of a cold-rolled and bright annealed stainless steel and forming a new coating thereon.

### [Technical Solution]

In accordance with an aspect of the present disclosure to achieve the above-described objects, a method for manufacturing a stainless steel for a polymer electrolyte membrane fuel cell separator includes performing alternating current electrolysis by immersing, in a sulfuric acid solution, a stainless steel having a passivation coating on a surface thereof formed by cold rolling and bright annealing, wherein the alternating current electrolysis is performed by applying a current density of 10 to 30 A/dm².

In the method for manufacturing a stainless steel for a polymer electrolyte membrane fuel cell separator according to an embodiment of the present disclosure, the stainless steel may include, in percent by weight (wt%), more than 0% and not more than 0.1% of C, more than 0% and not more than 0.3% of N, more than 0% and not more than 0.7% of Si, more than 0% and not more than 10% of Mn, more than 0% and not more than 0.04% of P, more than 0% and not more than 0.02% of S, 15 to 34% of Cr, 25% or less of Ni, and the remainder of Fe and other inevitable impurities.

In the method for manufacturing a stainless steel for a polymer electrolyte membrane fuel cell separator according to an embodiment of the present disclosure, a concentration of the sulfuric acid solution may be from 50 to 300 g/ℓ.

In the method for manufacturing a stainless steel for a polymer electrolyte membrane fuel cell separator according to an embodiment of the present disclosure, a temperature of the sulfuric acid solution may be from 40 to 80°C.

In the method for manufacturing a stainless steel for a polymer electrolyte membrane fuel cell separator according to an embodiment of the present disclosure, a time during which the current density is applied may be within 10 seconds.

In the method for manufacturing a stainless steel for a polymer electrolyte membrane fuel cell separator according to an embodiment of the present disclosure, a contact resistance may be 12 mΩ·cm² or less under a contact pressure of 100 N/cm².

### [Advantageous Effects]

According to the present disclosure, a non-conductive passivation coating present on the surface of a bright-annealed stainless steel may be efficiently removed and a new conductive coating may be formed by alternating current electrolysis that replaces conventional direct current electrolysis. Specifically, the conventional two-step direct current electrolysis may be simplified to the one-step alternating current electrolysis, and the process of immersing in a mixed acid bath performed after the electrolysis may be omitted. In addition, the time required for the alternating current electrolysis may be significantly reduced compared to the time required for the conventional electrolysis. As such, according to the present disclosure, productivity may be improved by reducing manufacturing time and costs by increasing efficiency of the post treatment process to reduce interfacial contact resistance of the stainless steel for a fuel cell separator.

In addition, according to the present disclosure, a rough shape may be provided to the surface of the stainless steel by using characteristics of AC power which continuously alternates in magnitude and direction every hour, and thus contact resistance of the stainless steel for a polymer electrolyte membrane fuel cell separator may further be reduced thereby.

### [Best Mode]

A method for manufacturing a stainless steel for a polymer electrolyte membrane fuel cell separator according to an embodiment of the present disclosure includes performing alternating current electrolysis by immersing, in a sulfuric acid solution, a stainless steel having a passivation coating on a surface thereof formed by cold rolling and bright annealing, wherein the alternating current electrolysis is performed by applying a current density of 10 to 30 A/dm².

### [Modes of the Invention]

Hereinafter, embodiments of the present disclosure will be described. The present disclosure is not limited to the embodiments shown herein but may be embodied in other forms. The following embodiments are provided to fully convey the spirit of the present disclosure to a person having ordinary skill in the art to which the present disclosure belongs.

The terms used herein are merely used to describe particular embodiments. Therefore, an expression used in the singular encompasses the expression of the plural unless it has a clearly different meaning in the context. In addition, it is to be understood that the terms such as "including" or "having" are intended to indicate the existence of features, operations, functions, components, or combinations thereof disclosed in the specification, and are not intended to preclude the possibility that one or more other features, operations, functions, components, or combinations thereof may exist or may be added.

Meanwhile, unless otherwise defined, all terms used herein have the same meaning as commonly understood by one of ordinary skill in the art to which present disclosure belongs. Therefore, unless clearly defined herein, specific terms should be interpreted as overly idealized or formal sense unless expressly so defined herein. For example, a singular form may include plural forms, unless it has a clearly different meaning in the context.

The terms "about", "substantially", etc. used throughout the specification means that when a natural allowable error are suggested in manufacturing and a substance, such an allowable error corresponds the value or is a value similar to the value, and such values are intended for the sake of clear understanding of the present invention or to prevent an unconscious infringer from illegally using the disclosure of the present invention.

A stainless steel for a polymer electrolyte membrane fuel cell separator according to an embodiment of the present disclosure may include a passivation coating on a surface thereof formed by cold rolling and bright annealing. According to an embodiment, the stainless steel may include, in percent by weight (wt%), more than 0% and not more than 0.1% of C, more than 0% and not more than 0.3% of N, more than 0% and not more than 0.7% of Si, more than 0% and not more than 10% of Mn, more than 0% and not more than 0.04% of P, more than 0% and not more than 0.02% of S, 15 to 34% of Cr, 25% or less of Ni, and the remainder of Fe and other inevitable impurities.

Hereinafter, reasons for numerical limitations on the contents of alloying elements in the embodiment of the present disclosure will be described. Hereinafter, the unit is wt% unless otherwise stated.

### C: more than 0% and not more than 0.1% and N: more than 0% and not more than 0.3%

C and N bind to Cr contained in a steel to form a Cr carbonitride, and thus a region in which Cr is locally depleted may be formed, thereby increasing a risk of deterioration of corrosion resistance. Therefore, it is preferable to control the contents of the two elements as low as possible. Thus, the contents of C and N are controlled in the present disclosure such that the C content is more than 0% and not more than 0.1%, and the N content is more than 0% and not more than 0.3.

### Si: more than 0% and not more than 0.7%

Si is an element effective on deoxidization. However, an excess of Si may deteriorate toughness and formability, and a SiO₂ generated during an annealing process deteriorates conductivity and hydrophilicity. In consideration thereof, the Si content is controlled to be more than 0% and not more than 0.7% in the present disclosure.

### Mn: more than 0% and not more than 10%

Mn is an element effective on deoxidization. However, MnS that is an Mn inclusion reduces corrosion resistance, and thus the Mn content is controlled to be more than 0% and not more than 10% in the present disclosure.

### P: more than 0% and not more than 0.04%

Because P deteriorates not only corrosion resistance but also toughness, the P content is controlled to be more than 0% and not more than 0.04% in the present disclosure.

### S: more than 0% and not more than 0.02%

S binds to Mn contained in a steel to form stable MnS, and the formed MnS serves as an origin of corrosion to deteriorate corrosion resistance, and thus it is preferable to control the S content as low as possible. In consideration thereof, the S content may be controlled to be more than 0% and not more than 0.02% in the present disclosure.

### Cr: 15 to 34%

Cr is an element enhancing corrosion resistance. Cr is actively added to obtain corrosion resistance in a strongly acidic operating environment of a fuel cell. However, an excess of Cr may deteriorate toughness, and thus the Cr content is controlled from 15 to 34% in the present disclosure in consideration thereof.

### Ni: 25% or less

Ni is an element stabilizing an austenite phase and enhancing corrosion resistance. In addition, Ni is generally contained in more than a certain amount in austenitic stainless steels and ferritic-austenitic dual-phase stainless steels. However, an excess of Ni may deteriorate workability, and thus the Ni content is controlled to be 25% or less in the present disclosure in consideration thereof.

A lower limit of Ni is not particularly limited and Ni may be appropriately contained according to steel types. For example, a lower limit of the Ni content in austenitic stainless steels or ferritic-austenitic dual-phase stainless steels may be 2.0% or more. For example, a lower limit of the Ni content may be less than 2.0%, preferably, 1.0% or less, more preferably, 0.01% or less, in ferritic stainless steels.

In addition, the stainless steel according to an embodiment may include as optional alloying elements, in percent by weight (wt%), at least one selected from more than 0% and not more than 0.6% of Cu, more than 0% and not more than 0.6% of V, 0.01 to 2.5% of Mo, 0.01 to 0.5% of Ti, and 0.01 to 0.4% of Nb. However, it is necessary to note that the compositions of the optional alloying elements is only intended to assist understanding of the present disclosure in more detail and are not intended to limit the scope of the present disclosure.

### Cu: more than 0% and not more than 0.6%

Cu is an element enhancing corrosion resistance. However, when an excess of Cu is added, Cu is eluted to deteriorate performance of a fuel cell. Thus, the Cu content is controlled to be more than 0% and not more than 0.6% in the present disclosure in consideration thereof.

### V: more than 0% and not more than 0.6%

V is an element enhancing the lifespan of a fuel cell by inhibiting elution of Fe in an operating environment of the fuel cell. However, an excess of V deteriorates toughness, and thus the V content is controlled to be more than 0% and not more than 0.6% in the present disclosure in consideration thereof.

### Mo: 0.01 to 2.5%

Mo is an element enhancing corrosion resistance. However, an excess of Mo deteriorate workability, and thus the Mo content is controlled to be from 0.01 to 2.5%.

### Ti: 0.01 to 0.5% and Nb: 0.01 to 0.4%

Ti and Nb bind to C and N contained in a steel to form a stable carbonitride and inhibit formation of a region in which Cr is locally depleted, thereby enhancing corrosion resistance. However, an excess of Ti and Nb deteriorates toughness, and thus the contents of Ti and Nb are controlled in the present disclosure such that the Ti content is in the range of 0.01 to 0.5% and the Nb content is in the range of 0.01 to 0.4% in consideration thereof.

The remaining component of the composition of the present disclosure is iron (Fe). However, the composition may include unintended impurities inevitably incorporated from raw materials or surrounding environments, and thus addition of other alloy components is not excluded. The impurities are not specifically mentioned in the present disclosure, as they are known to any person skilled in the art of manufacturing.

Hereinafter, a method for manufacturing a stainless steel for a polymer electrolyte membrane fuel cell separator according to an embodiment of the present disclosure will be described in detail.

The method for manufacturing a stainless steel for a polymer electrolyte membrane fuel cell separator according to an embodiment of the present disclosure may include performing alternating current electrolysis by immersing, in a sulfuric acid solution, a stainless steel including the above-described composition of alloying elements and having a passivation coating on a surface thereof formed by cold rolling and bright annealing.

In this regard, the cold rolling and bright annealing may be performed in any method commonly used in the art, without limitation.

For example, the cold rolling may be performed by cold rolling the stainless steel including the above-described composition of alloying elements into a cold-rolled steel sheet using a Z-mill, as a cold rolling mill.

For example, the bright annealing may be performed by bright annealing heat treatment in a reducing atmosphere containing hydrogen and nitrogen. When the bright annealing heat treatment is performed in a reducing atmosphere, a several nm-thick passivation coating with a smooth surface may be formed and, as such a surface passivation coating, a Cr-Fe oxide, a Mn oxide, a Si oxide, a Nb oxide, or the like may be formed.

The cold-rolled and bright-annealed stainless steel may have an increased interfacial contact resistance due to the several nm-thick passivation coating formed on the surface thereof. Therefore, in order to use the bright-annealed stainless steel as a separator of fuel cells, the non-conductive passivation coating present on the surface needs to be removed and a new conductive coating should be formed.

In the present disclosure, a concentration of the sulfuric acid solution may be from 50 to 300 g/ℓ. When the concentration of the sulfuric acid solution is less than 50 g/ℓ, conductivity may decrease making it difficult to remove the non-conductive passivation coating. On the contrary, when the concentration of the sulfuric acid solution exceeds 300 g/ℓ, the effect on removing the non-conductive passivation coating is saturated, and thus it is preferable that an upper limit of the concentration of the sulfuric acid solution is set to 300 g/ℓ in consideration of economic feasibility.

In the present disclosure, a temperature of the sulfuric acid solution may be from 40 to 80°C. When the temperature of the sulfuric acid solution is below 40°C, the removal efficiency of the non-conductive passivation coating may decrease. In addition, it is preferable that an upper limit of the temperature of the sulfuric acid solution is set to 80°C in consideration of stability.

In the present disclosure, by alternating current electrolysis, the non-conductive passivation coating present on the surface of the bright-annealed stainless steel may be efficiently removed and a new conductive coating may be formed.

In the case of performing electrolysis using a DC power according to the prior art, firstly, a non-conductive coating formed by bright annealing is completely removed using a high electric potential. When the high electric potential is continuously maintained, side reactions such as oxygen generation reaction may occur resulting in deterioration of modification efficiency, and chromium used to obtain sufficient conductivity may be eluted during the electrolysis. In consideration of these properties, surface modification should be performed with a low electric potential after the non-conductive coating is completely removed, and thus there is a problem of a slow modification rate due to the two-step electrolysis.

The present inventors have found that these problems may be solved by performing electrolysis using an AC power instead of the DC power. Alternating current (AC) is an electric current which reverses direction and changes magnitude continuously over time. Thus, by appropriately controlling the electric potential, side reactions may be suppressed while removing the non-conductive coating and a ratio of chromium contained in a surface region of a stainless steel may be increased by inducing selective elution of iron while inhibiting elution of chromium. In addition, due to characteristics of AC power which continuously alternates in magnitude and direction of voltage every hour, a rough shape may be provided to the surface of the stainless steel, and thus contact resistance may be reduced thereby.

In order to remove the non-conductive coating, an electric potential of the stainless steel should be 1.0 V_{SCE} or higher. By the AC power, the non-conductive coating is removed in a section where an electric potential is 1.0 V_{SCE} or higher. In a section where the electric potential is less than 1.0 V_{SCE}, side reactions such as oxygen generation reaction are suppressed due to the relatively low electric potential and chromium is not eluted during the electrolysis. Therefore, by appropriately adjusting the ratio of the section where the electric potential is 1.0 V_{SCE} or higher to the section where the electric potential is below 1.0 V_{SCE}, the non-conductive coating may be removed while suppressing side reactions and the surface of the stainless steel may be efficiently modified while inhibiting elution of chromium.

In addition, based on the characteristics of the AC power, when a current density allowing a maximum value of the electric potential of the stainless steel to be 1.0 V_{SCE} or higher is applied, the non-conductive coating may be removed while suppressing side reactions and a ratio of chromium contained in a surface region of a stainless steel may be increased by inducing selective elution of iron while inhibiting elution of chromium, and therefore a relatively high current density may be applied compared to electrolysis performed using a DC power. As a result, a surface modification rate of a stainless steel by alternating current electrolysis may be higher than the surface modification rate of a stainless steel by direct current electrolysis.

According to an embodiment of the present disclosure, the maximum value of the electric potential may be 1.0 V_{SCE} or higher by applying a current density of 10 A/dm² or higher. When a current density less than 10 A/dm² is applied, the electric potential of the stainless steel is less than 1.0 V_{SCE}, and thus there may be a problem in that the removal of the non-conductive coating is not efficiently performed. However, when the current density is too high, the ratio of the section where the electric potential is 1.0 V_{SCE} or higher becomes too large than that of the section where the electric potential is less than 1.0 V_{SCE}, side reactions such as oxygen generation reaction actively occurs and chromium may be eluted during electrolysis, thereby deteriorating the effects of surface modification. Accordingly, an upper limit of the current density applied herein is set to 30 A/dm². In consideration of these properties, the current density applied during the alternating current electrolysis according to an embodiment of the present disclosure may be in the range of 10 to 30 A/dm².

In the present disclosure, as a waveform of the AC power, all types of waveforms such as sine wave, square wave, triangle wave, and sawtooth wave may be applied as long as the ratio of the section where the electric power is 1.0 V_{SCE} or higher to remove the non-conductive coating to the section where the electric power is below 1.0 V_{SCE} to increase the ratio of chromium in the surface region of the stainless steel by inducing selective elution of iron while inhibiting elution of chromium and suppressing side reactions is appropriately controlled.

In the present disclosure, when a frequency of the AC power is too low, a problem in that the removed non-conductive coating is formed again in the section where the electric potential is 1.0 V_{SCE} or higher. In addition, when the frequency is too high, electrolysis efficiency may decrease. Therefore, the frequency of the AC power may be from 60 to 90 Hz.

According to the present disclosure as described above, the conventional two-step DC electrolysis may be simplified into one-step AC electrolysis and a process of immersing in a mixed acid bath after the electrolysis may be omitted. In addition, the time required for alternating current electrolysis is significantly reduced compared to the time required for conventional electrolysis. According to an embodiment, the time during which the current density is applied in the alternating current electrolysis may be within 10 seconds.

In addition, a rough shape may be provided to the surface of the stainless steel using characteristics of AC power which continuously alternates in magnitude and direction of voltage every hour, and thus contact resistance may further be reduced thereby. The stainless steel for a polymer electrolyte membrane fuel cell separator according to an embodiment of the present disclosure may have a contact resistance of 12 mΩ·cm² or less under a contact pressure of 100 N/cm².

Hereinafter, the present disclosure will be described in more detail through examples. However, it is necessary to note that the following examples are only intended to illustrate the present disclosure in more detail and are not intended to limit the scope of the present disclosure. This is because the scope of the present disclosure is determined by matters described in the claims and able to be reasonably inferred therefrom.

### Examples

A stainless steel having the composition of alloying elements shown in Table 1 below was cold-rolled using a Z-mill, as a cold rolling mill, and subjected to bright annealing heat treatment under a reducing atmosphere including 75 vol% of hydrogen and 25 vol% of nitrogen to prepare a cold-rolled steel sheet having a thickness of 0.1 mm.

In Table 1, steel type A is a ferritic stainless steel.

**Table 1**

| Steel type | Composition of alloying elements (wt%) | | | | | | | | | | |
|---|---|---|---|---|---|---|---|---|---|---|---|
| | C | N | Si | Mn | P | S | Cr | Ni | Ti | V | Nb |
| A | 0.008 | 0.012 | 0.1 | 0.15 | 0.015 | 0.0015 | 30 | 0.15 | 0.1 | 0.4 | 0.15 |

The cold-rolled steel sheet prepared according to Table 1 above was subjected to alternating current electrolysis under the conditions shown in Table 2 below. Meanwhile, Comparative Example 5 in Table 2 was subjected to electrolysis using a high electric potential using DC power according to the two-step DC current electrolysis of the prior art, and then electrolysis using a low electric potential.

In Table 2, the contact resistance values were obtained by cutting the prepared cold-rolled stainless steel sheet having a thickness of 0.1 mm into two pieces each having an area of 25 cm², disposing carbon paper (SGL-10BA) having an area of 4 cm² as a gas diffusion layer between the cold-rolled steel sheets, measuring contact resistances four times under a contact pressure of 100 N/cm², and calculating an average of the measured contact resistances.

In Table 2, corrosion resistance was evaluated under an operating environment of a fuel cell, i.e., by immersing the prepared cold-rolled stainless steel sheet having a thickness of 0.1 mm in a mixed acid solution containing sulfuric acid (1 M) and hydrofluoric acid (2 ppm) at a temperature of 70°C, and measuring an electric potential relative to a saturated calomel electrode (SCE), as a reference electrode. When the measured electric potential was 0.4 V_{SCE} or more, corrosion resistance was evaluated as good. When the measured electric potential was less than 0.4 V_{SCE}, corrosion resistance was evaluated as poor.

**Table 2**

| | | | | | | | |
|---|---|---|---|---|---|---|---|
| Example | | Steel type | Alternating current electrolysis | | | Contact resistance (mΩ·cm²) | Corrosi on |
| | | | Sulfuric acid solution | Current density | | | |

| | | Concentr ation ( g/ℓ) | Temper ature (°C) | (A/dm²) | Time for process (s) | | resistan ce |
|---|---|---|---|---|---|---|---|
| Inventive Example 1 | A | 200 | 60 | 10 | 7 | 8.4 | good |
| Inventive Example 2 | A | 200 | 60 | 15 | 4 | 9.7 | good |
| Inventive Example 3 | A | 200 | 60 | 15 | 7 | 5.7 | good |
| Inventive Example 4 | A | 200 | 60 | 20 | 4 | 6.2 | good |
| Inventive Example 5 | A | 200 | 60 | 30 | 7 | 10.9 | good |
| Inventive Example6 | A | 200 | 80 | 10 | 7 | 11.6 | good |
| Inventive Example 7 | A | 200 | 80 | 15 | 4 | 9.5 | good |
| Inventive Example 8 | A | 200 | 80 | 20 | 4 | 9 | good |
| Comparative Example 1 | A | 200 | 30 | 20 | 4 | 14.6 | good |
| Comparative Example 2 | A | 200 | 60 | 5 | 7 | 23.8 | poor |
| Comparative Example 3 | A | 200 | 60 | 5 | 20 | 25.3 | poor |
| Comparative Example 4 | A | 200 | 60 | 40 | 7 | 15.8 | good |
| Comparative Example 5 | A | 200 | 60 | DC | 39 | 5.1 | good |

Referring to Table 1, because Inventive Examples 1 to 8 satisfied the ranges of the concentration of the sulfuric acid solution, the temperature, and the current density suggested by the present disclosure, an application time of the current density was within 10 seconds, the contact resistance under the contact pressure of 100 N/cm² was 12 mΩ·cm² or less, and good corrosion resistance was obtained.

On the contrary, in Comparative Example 1, the temperature of the sulfuric acid solution was 30°C, which is out of the temperature range of the sulfuric acid solution suggested by the present disclosure, and thus the contact resistance under the contact pressure of 100 N/cm² exceeded 12 mΩ·cm².

In Comparative Example 2, the current density was 5 A/dm², which is out of the current density range suggested by the present disclosure, and thus the contact resistance measured by applying the current density for 7 seconds under the contact pressure of 100 N/cm² exceeded 12 mΩ·cm², and poor corrosion resistance was obtained. Therefore, it was confirmed that the surface of the stainless steel was not modified.

In Comparative Example 3, although the same current density as that of Comparative Example 2 was applied for 20 seconds, the contact resistance under the contact pressure of 100 N/cm² exceeded 12 mΩ·cm², and poor corrosion resistance was obtained. Therefore, it was confirmed that the surface of the stainless steel was not modified.

In Comparative Example 4, the current density was 40 A/dm², which is out of the current density range suggested by the present disclosure, and thus the surface modification effect rather deteriorated and the contact resistance under the contact pressure of 100 N/cm² exceeded 12 mΩ·cm².

In Comparative Example 5, although surface modification was completed by applying the conventional two-step direct current electrolysis, the time required for the surface modification process was 39 seconds which was slower than that of the alternating current electrolysis.

Based on the results of Inventive Examples and Comparative Examples, it was confirmed that the conventional two-step direct current electrolysis may be simplified to the one-step alternating current electrolysis, and the process of immersing in a mixed acid solution after the electrolysis may be omitted.

Particularly, upon comparison of Inventive Examples with Comparative Example 5, the time required for the alternating current electrolysis was significantly reduced compared to the time required for the conventional direct current electrolysis. According to the present disclosure, productivity may be improved by reducing manufacturing time and costs by increasing the efficiency of a post-treatment process to reduce interfacial contact resistance of the stainless steel for fuel cell separators.

While the present disclosure has been particularly described with reference to exemplary embodiments, it should be understood by those of skilled in the art that various changes in form and details may be made without departing from the spirit and scope of the present disclosure.

### [Industrial Applicability]

According to the present disclosure, a method for manufacturing a stainless steel for a polymer electrolyte membrane fuel cell separator may be provided.

## Claims

1. A method for manufacturing a stainless steel for a polymer electrolyte membrane fuel cell separator, the method comprising:
performing alternating current electrolysis by immersing, in a sulfuric acid solution, a stainless steel having a passivation coating on a surface thereof formed by cold rolling and bright annealing,
wherein the alternating current electrolysis is performed by applying a current density of 10 to 30 A/dm².

2. The method according to claim 1, wherein the stainless steel comprises, in percent by weight (wt%), more than 0% and not more than 0.1% of C, more than 0% and not more than 0.3% of N, more than 0% and not more than 0.7% of Si, more than 0% and not more than 10% of Mn, more than 0% and not more than 0.04% of P, more than 0% and not more than 0.02% of S, 15 to 34% of Cr, 25% or less of Ni, and the remainder of Fe and other inevitable impurities.

3. The method according to claim 1, wherein a concentration of the sulfuric acid solution is from 50 to 300 g/ℓ.

4. The method according to claim 1, wherein a temperature of the sulfuric acid solution is from 40 to 80°C.

5. The method according to claim 1, wherein a time required to apply the current density is within 10 seconds.

6. The method according to claim 1, wherein a contact resistance under a contact pressure of 100 N/cm² is 12 mΩ·cm² or less.
